# FASCICULE DE BREVET EUROPEEN

(11) **EP 0 353 199 B1**
(45) Date de publication et mention de la délivrance du brevet: **01.09.1993**
(21) Numéro de dépôt: 89830013.2
(22) Date de dépôt: 13.01.1989
(51) Int. Cl.: A22C 9/00, A22B 5/00

(54) **Méthode pour le faisandage rapide des viandes d'animaux abattus**
Verfahren zum schnellen Erreichen der Schlachtreife des Fleisches von Schlachttieren
Method for accelerating the ripening of meat of slaughtered animals

(30) Priorité: 29.07.1988 IT 519888
(43) Date de publication de la demande: 31.01.1990
(73) Titulaire: ELETTRONIC FROLL S.R.L., I-37045 Legnago (Verona) (IT)
(72) Inventeur: Panunzi, Franco, I-25072 Bagolino (Brescia) (IT); Ferrari, Alfredo, I-25072 Bagolino (Brescia) (IT)
(74) Mandataire: Manzoni, Alessandro

(56) Documents cités:
- EP-A- 0 032 110
- EP-A- 0 046 325
- EP-A- 0 090 478
- DE-A- 3 337 104
- FR-A- 2 519 846
- GB-A- 1 478 258
- GB-A- 2 069 815
- US-A- 2 544 681
- US-A- 2 544 724
- US-A- 4 358 872
- US-A- 4 495 676

## Description

On sait que les viandes des animaux abattus destinées à la consommation alimentaire doivent subir un traitement appelé "faisandage".

Ce traitement a pour but de donner à la viande les caractéristiques qui permettent sa consommation, comme, par exemple, la tendresse.

En général, le faisandage demande des temps assez longs qui empêchent la consommation presque immédiate de la viande.

Pour cette raison on a recouru à la méthode du faisandage par l'application d'un courant à la viande de l'animal en utilisant des systèmes divers mais qui sont tous plus ou moins dangereux, attendu que les courants appliqués sont relativement hautes et que l'application a lieu dans l'environnement humide d'un abattoir.

Par le document EP-A-0032110, est connu, par exemple, une méthode de faisandage des carcasses d'animaux abbatus, caractérisée en ce que les impulsions électriques sont amenées par la carcasse, les impulsions ayant une tension de pointe entre 10 et 100 Volts, de 80 Volts préférablement, et un'intensité de l'ordre de 0,2 ampère. Les impulsions sont amenées par la carcasse a partir du museau jusqu'à le rail de suspension en utilisant comme barne à terre la carcasse.

Les impulsions électriques sont à ondes carrées, triangulaires ou sinusoïdals et elles ont une fréquence entre 0,1 et 100 Hz, entre 10 et 15 Hz préférablement.

On a aussi constaté que ces méthodes ne permettent pas d'obtenir un résultat satisfaisant, car les viandes ne subissent pas des modifications enzymatiques importantes.

Il est par contre le but de cette invention de proposer une méthode pour le faisandage rapide des viandes des animaux abattus pour l'alimentation qui élimine les inconvénients susmentionnés et permet d'obtenir les résultats désirés.

La méthode en question est essentiellement caractérisé en ce que les électrodes pour l'amenée du courant sont appliquées respectivement en contact avec le cerveau et/ou la moelle épinière et aux tendons d'Achille (3) de la carcasse, de l'animal.

Cette manière différente d'application des électrodes à l'animal abattu en utilisant un courant à bas voltage donnent des avantages pour un meilleur et plus rapide faisandage des viandes en laissant inaltérées les propriétés organoleptiques, à une consommation d'énergie plus basse et en toute sécurité pour les opérateurs.

Les détails de l'invention résulteront plus évidents par la description suivante faite en se référant au dessin ci-joint, où:
- la Fig. 1: montre schématiquement l'application des électrodes à l'animal abattu;
- la Fig. 2: montre un schéma-bloc des appareils utilisés pour le faisandage; et
- la Fig. 3: est un diagramme qui montre les variations du pH dans la viande en fonction du temps.

Dans le dessin le numéro 1 indique le corps de l'animal abattu tout entier et le numéro 2 indique le trou de pénétration du projectil utilisé pour abattre l'animal, tandis que les numéros 3 indiquent les "tendons d'Achille".

Selon l'invention, préférablement dans le trou 2 on introduit une électrode sortie en baguette 4 qui va contacter le cerveau et/ou la moelle épinière de l'animal, tandis que les électrodes reference 5 sont accrochées aux tendons d'Achille. En cas d'autre, quand durant l'abbatage le tête serait demontée, l'électrode sortie il se peut introduire aussi directement dans la moelle épinière.

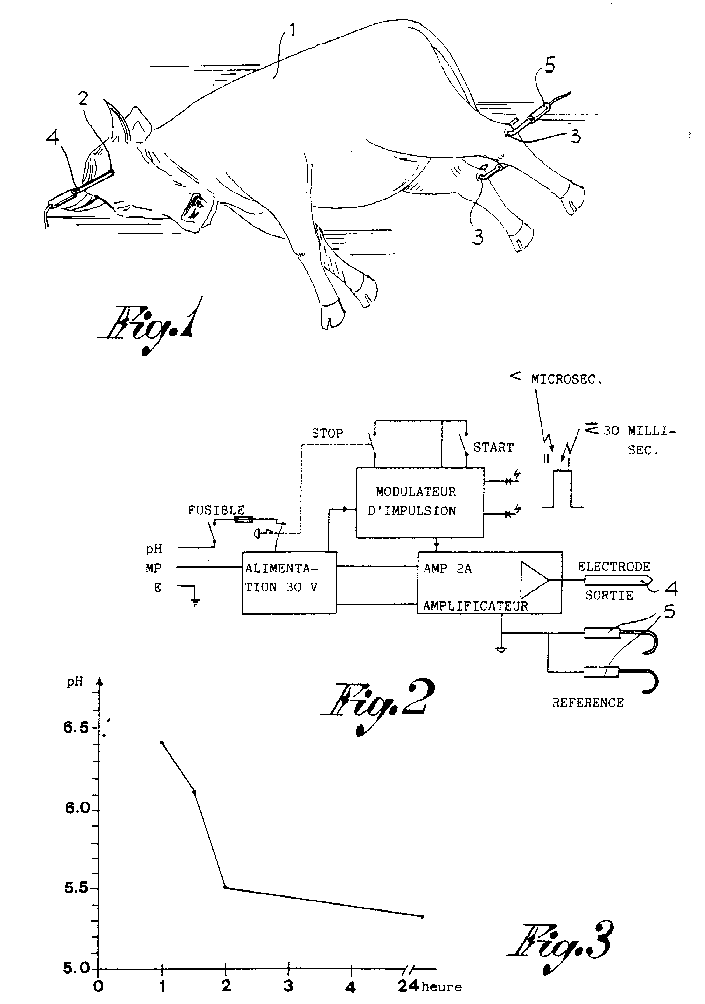

Les électrodes 4 e 5 sont électriquement connectées à l'appareil dont à la Fig. 2 prédisposé pour l'émission d'impulsions continues de courant à grande vitesse ou ayant une durée inférieure à une microseconde.

Avantageusement, il faut que les impulsions de courant aient une tension de pointe égale de ou inférieure à 45 volts, préférablement de 24 volts ou moins, une intensité égale de ou inférieure à 1 ampère ou moins et une fréquence de 15 Hz préférablement. La viande de l'animal mort est donc électrostimulée par des impulsions ayant une durée inférieure à une microseconde et en tout cas pas supérieure à 30 millisecondes, tandis que la durée du traitement pourra varier entre 2 et 5 minutes.

La méthode de faisandage rapide au moyen de l'application de courant décrite ci-dessus comporte aussi que, à la distance de deux heures environ du traitement, le pH de la viande descendre à une valeur inférieure à 5,8, comme montre le diagramma en Fig. 3 en obtenant ainsi un degré de faisandage optimal.

## Revendications

1. Méthode pour le faisandage rapide des viandes d'animaux abattus au moyen d'une électrostimulation obtenue par l'application d'un courant électrique, caractérisée en ce que les électrodes (4-5) pour l'amenée du courant sont appliquées en contact avec le cerveau et/ou la moelle épinière et aux tendons d'Achille (3) de l'animal abattu et en ce que le courant utilisé est un courant pulsé dont la tension "de pointe" est égale ou inférieure à 45 volts, son intensité étant égale ou inférieure à 1 ampère et sa fréquence étant préferablement de 15 Hz.

2. Méthode pour le faisandage rapide des viandes d'animaux abattus au moyen d'une électrostimulation selon la revendication 1), caractérisée en ce que la durée du traitement varie entre 2 et 5 minutes.

## Patentansprüche

1. Verfahren zum schnellen Erreichen der Schlachtreife des Fleisches von Schlachttieren mittels Elektroerregung durch die Zuführung von elektrischem Strom, dadurch gekennzeichnet, daß die Elektroden (4, 5) für die Stromzuführung an dem Hirn und/oder dem Rückenmark und an den Achillessehnen (3) des geschlachteten Tieres angebracht werden, und daß der zugeführte Strom ein pulsierender Strom ist, dessen "Spitzenspannung" gleich oder niedriger ist als 45 Volt, dessen Stromstärke gleich oder niedriger ist als 1 Ampere und dessen Frequenz vorzugsweise 15 Hz beträgt.

2. Verfahren zum schnellen Erreichen der Schlachtreife des Fleisches von Schlachttieren mittels Elektroerregung nach Anspruch 1, dadurch gekennzeichnet, daß die Behandlung von 2 bis 5 Minuten dauert.

## Claims

1. A method for accelerating the ripening of meat of slaughtered animals by electrostimulation, obtained by applying an electric current, characterized in that electrodes (4, 5) conducting the current are applied in contact with the brain and/or the spinal marrow and with the Achilles' tendons (3) of the animal killed, and in that the current used is a pulsating current showing a 'peak' voltage equal or inferior to 45 volts, a strength equal or inferior to 1 ampere and a frequency of preferably 15 Hz.

2. A method for accelerating the ripening of meat of slaughtered animals by electrostimulation as claimed in claim 1, wherein said treatment lasts from 2 to 5 minutes.
